Europäisches Patentamt

European Patent Office

Office européen des brevets

(19)

(11) Veröffentlichungsnummer: **0 299 077**
A1

(12) **EUROPÄISCHE PATENTANMELDUNG**

Veröffentlicht nach Art. 158 Abs. 3 EPÜ

(21) Anmeldenummer: 88900957.7

(22) Anmeldetag: 18.09.87

Daten der zugrundeliegenden internationalen Anmeldung:

(86) Internationale Anmeldenummer:
PCT/SU87/00104

(87) Internationale Veröffentlichungsnummer:
WO88/05374 (28.07.88 88/17)

(51) Int. Cl.³: **B 29 B 13/10**

(30) Priorität: 15.01.87 SU 4172308

(43) Veröffentlichungstag der Anmeldung:
18.01.89 Patentblatt 89/3

(84) Benannte Vertragsstaaten:
DE FR GB IT SE

(71) Anmelder: OPYTNO-EXPERIMENTALNY ZAVOD
POLIMERNYKH IZDELY
Peschany karier, 15
Moscow, 109383(SU)

(72) Erfinder: ENIKOLOPOV, Nikolai Sergeevich
Kutuzovsky pr., 26-245
Moscow, 121165(SU)

(72) Erfinder: MALYSHEV, Valery Vasilievich
ul. Oktyabrskaya, 91-2-28
Moscow, 137581(SU)

(72) Erfinder: BIBICHEV, Agry Vyacheslavovich
2-oi Khvostov per., 10-1-40
Moscow, 109180(SU)

(72) Erfinder: SHERSTNEV, Pavel Petrovich
ul. Perovskaya, 62-21
Moscow, 111394(SU)

(72) Erfinder: NEPOMNYASCHY, Anatoly Isaakovich
ul. Scherbakovskaya, 5-52
Moscow, 105318(SU)

(72) Erfinder: FILMAKOVA, Lidia Alexandrovna
ul. Chechulina, 4-1-256
Moscow, 105568(SU)

(74) Vertreter: von Füner, Alexander, Dr. et al,
Patentanwälte v. Füner, Ebbinghaus, Finck Mariahilfplatz
2 & 3
D-8000 München 90(DE)

(54) **VERFAHREN ZUR HERSTELLUNG VON KAUTSCHUKPULVER AUF DER BASIS VON NATÜRLICHEM ODER SYNTHETISCHEM KAUTSCHUK.**

(57) Das Verfahren zur Herstellung eines Pulvers aus Gummi auf der Basis von Natur- oder Synthesekautschuken in einer Schnecken-Nocken-Zerkleinerungsmaschine besteht darin, daß man Gummi auf der Basis von Natur- oder Synthesekautschuken in der Schneckenzone der Zerkleinerungsmaschine bis zu einem Wert von 0,2 bis 0,7 MPa zusammenpreßt, dann das zusammengepreßte Material unter gleichzeitiger Einwirkung eines Druckes von 0,2 bis 50 MPa und einer Schubkraft bis zu einer Schubspannung von 0,03 bis 5 H/mm² in der Nockenzone der Zerkleinerungsmaschine zerkleinert, wobei man die Zerkleinerung unter isothermischen Verhältnissen bei einer Temperaturschwankung über die Länge der Nockenzone der Zerkleinerungsmaschine von (1,05 bis 0,95) t durchführt, worin t – Temperatur im mittleren Teil der Nockenzone der Zerkleinerungsmaschine bedeutet und 60 bis 180°C beträgt.

EP 0 299 077 A1

# VERFAHREN ZUR HERSTELLUNG EINES PULVERS AUS GUMMI AUF DER BASIS VON NATUR- UND SYNTHESEKAUTSCHUKEN

## Gebiet der Technik

Die vorliegende Erfindung bezieht sich auf Verfahren zur Regenerierung von Gummi und betrifft insbesondere Verfahren zur Herstellung eines Pulvers aus Gummi auf der Basis von Natur- und Synthesekautschuken. Das genannte Pulver kann als Füllstoff für Gummimischungen und polymere Verbundwerkstoffe auf der Basis von thermoplastischen Kunststoffen verwendet werden.

## Zugrundeliegender Stand der Technik

Die bei der Produktion von technischen Gummiwaren, Reifen, Gummischuhen als Abgrat und Ausschuß anfallenden Abfälle sowie die gebrauchten Reifen und technische Gummiwaren können wiederverwendungsfähig gemacht werden, wenn sie in ein feindisperses Pulver verwandelt sind.

Es ist bekannt, daß Altgummi, darunter auch ein Kordgewebe enthaltender Gummi in zerkleinerter Form in einer Menge von 20 bis 30 Masse% in Gummimischungen anstelle von Kautschuk (welchen er teilweise ersetzt) zur Herstellung vieler Erzeugnisse eingeführt werden kann. Die Verwendung des zerkleinerten Gummis mit einer Teilchengröße von unter 500 µm führt zu keiner Verschlechterung der Eigenschaften der Fertigerzeugnisse; im Gegenteil er trägt dazu bei, daß einige dieser Eigenschaften, wie Abrieb- und Rißfestigkeit verbessert werden.

Es ist ein Verfahren zur Herstellung eines Pulvers aus Gummi auf der Basis von Natur- oder Synthesekautschuken in einer Schnecken-Nocken-Zerkleinerungsmaschine bekannt, bei dem man das genannte Material in der Schnekkenzone der Zerkleinerungsmaschine bis zum einem Wert von 0,2 bis 0,7 MPa zusammenpreßt, dann das zusammengepreßte Material unter gleichzeitiger Einwirkung eines Druckes von 0,2 bis 50 MPa und einer Schubkraft bis zu einer Schubspannung von 0,03 bis 5 H/mm$^2$ in der Nockenzone der Zerkleinerungsmaschine bei einer Erwärmung auf 80 bis 250°C zerkleinert und anschließend auf eine Temperatur von 15 bis 60°C abkühlt (US,A,4607796).

In dem genannten Verfahren kann ein Pulver aus Gummi auf der Basis von Natur- oder Synthesekautschuken mit einem hohen Dispersitätsgrad (mit einer Teilchengröße von unter 300 µm) ohne großen Energieaufwand hergestellt werden.

Ein Nachteil des bekannten Verfahrens besteht darin, daß das nach diesem Verfahren gewonnene Pulver durch eine hohe Polydispersität gekennzeichnet ist, wobei der Gehalt an der Endkornfraktion mit einer Größe von 50 bis 200 um nicht einmal 70 Masse% der Kornzusammensetzung des Pulvers beträgt. Die hohe Polydispersitat des Pulvers gestattet es nicht, Erzeugnisse mit homogenen Eigenschaften aus das genannte Pulver enthaltenden Gummimischungen und polymeren Verbundwerkstoffen herzustellen.

Offenbarung der Erfindung

Der Erfindung liegt die Aufgabe zugrunde, in einem Verfahren zur Herstellung eines Pulvers aus Gummi auf der Basis von Natur- oder Synthesekautschuken solche Temperaturverhältnisse in der Nockenzone der Zerkleinerungsmaschine zu wählen, durch die die Homogenität der Kornzusammensetzung des herzustellenden Pulvers erhöht werden kann.

Diese Aufgabe wird dadurch gelöst, daß ein Verfahren zur Herstellung eines Pulvers aus Gummi auf der Basis von Natur- oder Synthesekautschuken in einer Schnecken-Nocken--Zerkleinerungsmaschine vorgeschlagen wird, bei dem man das genannte Material in der Schneckenzone der Zerkleinerungsmaschine bis zu einem Wert von 0,2 bis 0,7 MPa zusammenpreßt, dann das zusammengepreßte Material unter gleichzeitiger Einwirkung eines Druckes von 0,2 bis 50 MPa und einer Schubkraft bis zu einer Schubspannung von 0,3 bis 5 H/mm$^2$ in der Nockenzone der Zerkleinerungsmaschine zerkleinert, wobei man erfindungsgemäß die Zerkleinerung unter isothermischen Verhältnissen bei einer Temperaturschwankung über die Länge der Nockenzone der Zerkleinerungsmaschine von (1,05 bis 0,95) t durchführt, worin t - Temperatur im mittleren Teil der Nockenzone der Zerkleinerungsmaschine bedeutet und 60 bis 180°C beträgt.

Das erfindungsgemäße Verfahren gestattet es, aus Gummi auf der Basis von Natur- oder Synthesekautschuken ein Pul-

- 3 -

ver mit einer homogenen Kornzusammensetzung und mit einem Gehalt an der Endkornfraktion mit einer Korngröße von 50 bis 200 µm bis zu 87 Masse% zu gewinnen, während nach dem bekannten Verfahren das nicht erreicht werden kann.

Die vorliegende Erfindung gestattet es, den Gehalt an dem Gummipulver in Gummimischungen bis auf 40 Masse% ohne Verschlechterung der physikalisch-mechanischen und plastisch-elastischen Eigenschaften der Gummimischungen zu erhöhen, wobei es auch möglich wird, das genannte Pulver als Füllstoff bei der Herstellung von polymeren Verbundwerkstoffen auf der Basis von Thermoplasten zu verwenden.

Eine Erhöhung der Homogenität der Kornzusammensetzung des herzustellenden Pulvers (eine hohe Ausbeute der Endkornfraktion) kann unter Einhaltung aller technologischer Parameter des erfindungsgemäßen Verfahrens erzielt werden.

Eine Herabsetzung der unteren Grenze des Wertes des Zusammenpressens des Materials in der Schneckenzone der Zerkleinerungsmaschine sowie eine Herabsetzung der unteren Grenzwerte des Druckes und der Schubspannung in der Nockenzone der Zerkleinerungsmaschine führen zu einer Kornvergrößerung des herzustellenden Pulvers und zu einer Verminderung der Ausbeute der Endkornfraktion. Eine Überschreitung der oberen Grenzen der oben erwähnten technologischen Parameter führt zum Erzielen eines zusätzlichen Effektes nicht, sondern hat eine Erhöhung des Energieaufwandes und eine Herabsetzung der Produktivität des Prozesses zur Folge.

Wie oben bereits erwähnt wird die Zerkleinerung des Materials in der Nockenzone der Zerkleinerungsmaschine unter isothermischen Verhältnissen bei einer Temperaturschwankung über die Länge der Nockenzone von (1,05 bis 0,95) t durchgeführt, worin t-Temperatur im mittleren Teil der Nockenzone der Zerkleinerungsmaschine bedeutet und 60 bis 180°C beträgt. Die Durchführung der Zerkleinerung unter isothermischen Verhältnissen in dem genannten Temperaturbereich erfolgt mit einem minimalen Energieaufwand

- 4 -

für die Zerstörung von Gummi wobei ein Pulver mit einer homogenen Kornzusammensetzung hergestellt wird. Bei einer Herabsetzung der Temperaturwerte in der Nockenzone der Zerkleinerungsmaschine unterhalb der vorgesehenen unterer Grenze werden der Energieaufwand für die Gummizerkleinerung stark erhöht und die Ausbeute der Endkornfraktion des Pulvers vermindert. Eine Vergrößerung der Temperaturwerte in der Nockenzone oberhalb der vorgesehenen oberen Grenze kann zu einem Kautschukabbau führen, was im weiteren die Eigenschaften der Fertigerzeugnisse, die unter Verwendung des Gummipulvers als Füllstoff hergestellt werden, negativ beeinflußt.

Bevorzugte Durchführungsvariante der Erfindung

Das erfindungsgemäße Verfahren zur Herstellung eines Pulvers aus Gummi auf der Basis von Natur- oder Synthesekautschuken wird in einer Schnecken-Nocken-Zerkleinerungsmaschine (vom Typ eines Extruders, jedoch ohne Formkopf) durchgeführt, die eine Schnecken- und eine Nockenzone hat. In die genannte Zerkleinerungsmaschine werden Stücke vom Gummi auf der Basis von Natur- oder Synthesekautschuken mit einer Stückgröße von, z.B., 1 bis 10 mm aufgegeben. In der Schneckenzone der Zerkleinerungsmaschine wird das Material bis zu einem Wert von 0,2 bis 0,6 MPa zusammengepreßt, wonach das zusammengepreßte Material in der Nockenzone unter gleichzeitiger Einwirkung eines Druckes von 0,2 bis 50 MPa und einer Schubkraft bis zu einer Schubspannung von 0,03 bis 5 H/mm$^2$ zerkleinert wird. Die Zerkleinerung des Materials in der Nockenzone wird unter isothermischen Verhältnissen bei einer Temperaturschwankung über die Länge der Nockenzone von (1,05 bis 0,95) t durchgeführt, worin t-Temperatur im mittleren Teil der Nockenzone bedeutet und 60 bis 180°C beträgt.

Als Ausgangsmaterial verwendet man Gummi auf der Basis von Natur- oder Synthesekautschuken in Form von Abfällen aus der Produktion von Reifen, technischen Gummiwaren und Gummischuhen (Abgrat, Ausschuß) sowie in Form von Altgummiartikeln, darunter auch von Reifen.

Das nach der oben beschriebenen Technologie herge-

- 5 -

stellte Pulver zeichnet sich durch einen hohen Dispersitätsgrad und eine hohe Homogenität aus und kann in Gummimischungen und polymeren Verbundwerkstoffen auf der Basis von Thermoplasten als Füllstoff wirksam eingesetzt werden.

Zu einem besseren Verständnis der vorliegenden Erfindung werden nachstehend konkrete Durchführungsbeispiele der Erfindung angeführt. Die Kornzusammensetzung der gewonnenen Pulver wird in einer Tabelle im Anschluß an die Durchführungsbeispiele angegeben.

Beispiel 1

In eine Schnecken-Nocken-Zerkleinerungsmaschine wird Gummi auf der Basis von Naturkautschuk mit einer Stückgröße von 1 bis 10 mm aufgegeben und unter einem Druck von 0,2 MPa in der Schneckenzone der Zerkleinerungsmaschine zusammengepreßt. Dann wird das zusammengepreßte Material in der Nockenzone der Zerkleinerungsmaschine zerkleinert, wobei ein Druck von 50 MPa und eine Schubspannung von 2,5 $H/mm^2$ aufrechterhalten werden. Die Zerkleinerung in der Nockenzone wird unter isothermischen Verhältnissen durchgeführt, die durch eine unabhängige Abkühlung der Nockenzone mit einem Kühlmittel, z.B. mit Wasser, aufrechterhalten werden. Dabei wird der Kühlmittelverbrauch so geregelt, daß die Temperatur (t) im mittleren Teil der Nockenzone $120^oC$, am Eintritt in die Nockenzone - $126^oC$ (1,05t) und am Austrott aus der Nockenzone - $114^oC$ (0,95t) beträgt.

Das gewonnene Pulver wird nach der Korngröße klassiert.

Beispiel 2

In eine Schnecken-Nocken-Zerkleinerungsmaschine wird Gummi auf der Basis von Isoprenkautschuk mit einer Stückgröße von 1 bis 10 mm aufgegeben und unter einem Druck von 0,45 MPa in der Schneckenzone der Zerkleinerungsmaschine zusammengepreßt. Dann wird das zusammengepreßte Material in der Nockenzone der Zerkleinerungsmaschine zerkleinert, wobei ein Druck von 25 MPa und eine Schubspannung von 0,03 $H/mm^2$ aufrechterhalten werden. Die Zerkleinerung in der Nockenzone wird unter isothermischen Verhältnissen durchgeführt, die durch eine unabhängige Abkühlung der Nockenzone mit einem Kühlmittel aufrechterhalten werden. Dabei wird der Kühlmittelverbrauch so geregelt, daß die Temperatur (t) im mittleren Teil der Nockenzone 60°C, am Eintritt in die Nockenzone - 61°C (1,017 t) und am Austritt aus der Nockenzone- 58°C (0,97 t) beträgt.

Das gewonnene Pulver wird nach der Korngröße klassiert.

Beispiel 3

In eine Schnecken-Nocken-Zerkleinerungsmaschine wird Gummi auf der Basis von Butadienmethylstyrolkautschuk mit einer Stückgröße von 1 bis 10 mm aufgegeben und unter einem Druck von 0,7 MPa in der Schneckenzone der Zerkleinerungsmaschine zusammengepreßt. Dann wird das zusammengepreßte Material in der Nockenzone der Zerkleinerungsmaschine zerkleinert, wobei ein Druck von 0,2 MPa und eine Schubspannung von 5 H/mm$^2$ aufrechterhalten werden. Die Zerkleinerung in der Nockenzone wird unter isothermischen Verhältnissen durchgeführt, die durch eine unabhängige Abkühlung der Nockenzone mit einem Kühlmittel aufrechterhalten werden. Dabei wird der Kühlmittelverbrauch so geregelt, daß die Temperatur (t) im mittleren Teil der Nockenzone 180°C, am Eintritt in die Nockenzone - 185°C (1,03 t) und am Austritt aus der Nockenzone - 175°C (0,97t) beträgt.

Das gewonnene Pulver wird nach der Korngröße klassiert.

Beispiel 4

In eine Schnecken-Nocken-Zerkleinerungsmaschine wird Gummi auf der Basis von Butadienkautschuk mit einer Stückgröße von 1 bis 10 mm aufgegeben und unter einem Druck von 0,5 MPa in der Schneckenzone der Zerkleinerungsmaschine zusammengepreßt. Dann wird das zusammengepreßte Material in der Nockenzone der Zerkleinerungsmaschine zerkleinert, wobei ein Druck von 10 MPa und eine Schubspannung von 1 H/mm$^2$ aufrechterhalten werden. Die Zerkleinerung in der Nockenzone wird unter isothermischen Verhältnissen durchgeführt, die durch eine unabhängige Abkühlung der Nockenzone mit einem Kühlmittel aufrechterhaten werden. Dabei wird der Kühlmittelverbrauch so geregelt, daß die Temperatur (t) im mittleren Teil der Nockenzone 100°C, am Eintritt in die

- 7 -

Nockenzone sowie am Austritt aus der Nockenzone ebenfalls 100°C beträgt.

Das gewonnene Pulver wird nach der Korngröße klassiert.

Beispiel 5

In eine Schnecken-Nocken-Zerkleinerungsmaschine wird Gummi auf der Basis von Naturkautschuk mit einer Stückgröße von 1 bis 10 mm aufgegeben und unter einem Druck von 0,5 MPa in der Schneckenzone der Zerkleinerungsmaschine zusammengepreßt. Das zusammengepreßte Material wird in der Nockenzone der Zerkleinerungsmaschine zerkleinert, wobei ein Druck von 10 MPa und eine Schubspannung von 1 H/mm$^2$ aufrechterhalten werden. Die Zerkleinerung in der Nockenzone wird unter isothermischen Verhältnissen durchgeführt, die durch eine unabhängige Abkühlung der Nockenzone mit einem Kühlmittel aufrechterhalten werden. Dabei wird der Kühlmittelverbrauch so geregelt, daß die Temperatur (t) im mittleren Teil der Nockenzone 100°C, am Eintritt in die Nockenzone ebenfalls 100°C und am Austritt aus der Nockenzone - 98°C (0,98 t) beträgt.

Das gewonnene Pulver wird nach der Korngröße klassiert.

Beispiel 6 (Vergleichsbeispiel)

Gemäß US,A,4607796 wird in eine Schnecken-Nocken--Zerkleinerungsmaschine Gummi aus der Basis von Isoprenkautschuk mit einer Stückgröße von 1 bis 10 mm aufgegeben und unter einem Druck von 0,45 MPa in der Schneckenzone der Zerkleinerungsmaschine zusammengepreßt. Dann wird das zusammengepreßte Material in der Nockenzone der Zerkleinerungsmaschine zerkleinert, wobei ein Druck von 25 MPa und eine Schubspannung von 0,03 H/mm$^2$ aufrechterhalten werden. In der Nockenzone wird dabei das zu zerkleinernde Material zuerst bis auf eine Temperatur von 100°C erwärmt und dann auf eine Temperatur von 30°C abgekühlt.

Das gewonnene Pulver wird nach der Korngröße klassiert.

Beispiel 7 (Vergleichsbeispiel)

Gemäß US,A,4607796 wird in eine Schnecken-Nocken-Zerkleinerungsmaschine Gummi auf der Basis von Naturkautschuk mit einer Stückgröße 1 bis 10 mm aufgegeben und un-

– 8 –

ter einem Druck von 0,2 MPa in der Schneckenzone der Zerkleinerungsmaschine zusammengepreßt. Dann wird das zusammengepreßte Material in der Nockenzone der Zerkleinerungsmaschine zerkleinert, wobei ein Druck von 50 MPa und eine Schubspannung von 2,5 H/mm$^2$ aufrechterhalten werden. In der Nockenzone wird dabei das zu zerkleinernde Material zuerst bis auf eine Temperatur von 120°C erwärmt und dann auf eine Temperatur von 30°C abgekühlt.

Das gewonnene Pulver wird nach der Korngröße klassiert

Die Kornzusammensetzungen der nach dem erfindungsgemäßen Verfahren (Beispiele 1 bis 5) und nach dem bekannten Verfahren (Beispiele 6 und 7) hergestellten Pulver sind in der Tabelle angegeben.

Tabelle

| Kornfraktionszusammensetzung des Pulvers | Kornfraktionsgehalt des Pulvers, Masse% | | | | | | |
|---|---|---|---|---|---|---|---|
| | Beispiel 1 | Beispiel 2 | Beispiel 3 | Beispiel 4 | Beispiel 5 | Beispiel 6 | Beispiel 7 |
| Kornfraktion von unter 50 µm | 13 | 15 | 15 | 10 | 17 | 15 | 12 |
| Kornfraktion von 50 bis 200 µm (Endkornfraktion) | 72 | 78 | 80 | 87 | 75 | 65 | 58 |
| Kornfraktion von über 200 µm | 15 | 7 | 5 | 3 | 8 | 20 | 30 |

Wie es aus der Tabelle zu ersehen ist, gestattet das erfindungsgemäße Verfahren es, Gummipulver mit einem Endkornfraktionsgehalt bis zu 87 Masse% herzustellen, während nach dem bekannten Verfahren (Beispiel 6 und 7) der maximale Endkornfraktionsgehalt des gewonnenen Pulvers unter 65 Masse% liegt.

Somit kann im erfindungsgemäßen Verfahren die Homogenität der Kornzusammensetzung des herzustellenden Pulvers erhöht werden so daß dieses Pulver als Bestandteil von Gummimischungen in einer Menge bis zu 40 Masse% verwen-

- 9 -

det werden kann; das erfindungsgemäße Verfahren gewährleistet auch die Herstellung von Erzeugnissen aus den genannten Gummimischungen mit homogenen Eigenschaften.

Das erfindungsgemäße Verfahren wird kontinuierlich durchgeführt, ist unter den Bedingungen eines Industriebetriebes leicht realisierbar und erfordert keine Sonderausrüstungen zu seiner Durchführung.

Industrielle Anwendbarkeit

Die vorliegende Erfindung kann zur Verwertung von Abfällen, die bei der Produktion von Reifen, technischen Gummiwaren und von Gummischuhen anfallen, sowie von verschiedenen Altgummiartikeln, darunter auch von Reifen, angewendet werden.

– 10 –

PATENTANSPRUCH

Verfahren zur Herstellung eines Pulvers aus Gummi auf der Basis von Natur- oder Synthesekautschuken in einer Schnecken-Nocken-Zerkleinerungsmaschine, bei dem man das genannte Material in der Schneckenzone der Zerkleinerungsmaschine bis zu einem Wert von 0,2 bis 0,7 MPa zusammenpreßt, dann das zusammengepreßte Material unter gleichzeitiger Einwirkung eines Druckes von 0,2 bis 50 MPa und einer Schubkraft bis zu einer Schubspannung von 0,03 bis 5 H/mm$^2$ in der Nockenzone der Zerkleinerungsmaschine zerkleinert, dadurch gekennzeichnet, daß man die Zerkleinerung unter isothermischen Verhältnissen bei einer Temperaturschwankung über die Länge der Nockenzone der Zerkleinerungsmaschine von (1,05 bis 0,95) t durchführt worin t– Temperatur im mittleren Teil der Nockenzone der Zerkleinerungsmaschine bedeutet und 60 bis 180°C beträgt.

# INTERNATIONAL SEARCH REPORT

0299077

International Application No PCT/SU 87/00104

## I. CLASSIFICATION OF SUBJECT MATTER (if several classification symbols apply, indicate all) [6]

According to International Patent Classification (IPC) or to both National Classification and IPC

IPC[4] B29B 13/10

## II. FIELDS SEARCHED

### Minimum Documentation Searched [7]

| Classification System | Classification Symbols |
|---|---|
| IPC[4] | B29B 13/10 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 4607796 (Nauchno-Proizvodstvennoe Obiedinenie "Norplast") 26 August 1986 (26.08.86) see examples 1-10, claims 1,2 | 1 |
| T | "Poluchenie i primenenie tonkoizmelchennykh poroshkov reziny i poroshkovogo regenerata", tematichesky obzov, 1987, TSNIITENEFTEKHIM (Moscow); see pages 22,24 | 1 |
| A | "Vtorichnoe ispolzovanie polimernykh materialov" pod redaktsiei E.G. Ljubeshkinoi, 1985, Khimia, (Moscow) see page 145, table 8.2 | 1 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family

## IV. CERTIFICATION

| Date of the Actual Completion of the International Search | Date of Mailing of this International Search Report |
|---|---|
| 22 December 1987 (22.12.87) | 31 March 1988 (31.03.88) |
| International Searching Authority | Signature of Authorized Officer |
| ISA/SU | |

Form PCT/ISA/210 (second sheet) (January 1985)